# FASCICULE DE BREVET EUROPEEN

(11) **EP 2 401 238 B1**
(45) Date de publication et mention de la délivrance du brevet: **14.08.2013**
(21) Numéro de dépôt: 10709904.6
(22) Date de dépôt: 24.02.2010
(51) Int. Cl.: C04B 18/02, C04B 40/06, C04B 14/06, C04B 24/26

(54) **COMPOSITION UTILE POUR LA PREPARATION D'UN BETON SANS AJOUT D'EAU**
ZUSAMMENSETZUNG ZUR HERSTELLUNG VON BETON OHNE ZUGABE VON WASSER
COMPOSITION USED FOR PREPARING CONCRETE WITHOUT ADDING WATER

(30) Priorité: 24.02.2009 FR 0951151
(43) Date de publication de la demande: 04.01.2012
(73) Titulaire: Vicat, 92095 Paris La Défense (FR)
(72) Inventeur: PASQUIER, Michel, F-69006 Lyon (FR); ROGAT, Damien, F-69100 Villeurbanne (FR)
(74) Mandataire: Maureau, Philippe
(86) Numéro de dépôt international: PCT/FR2010/050312
(87) Numéro de publication internationale: WO 2010/097543

(56) Documents cités:
- EP-A1- 0 338 739
- WO-A1-2009/006377
- WO-A2-2008/031870
- DE-B4- 4 447 961
- JP-A- 11 092 188

## Description

La présente invention a pour objet une composition permettant la préparation d'un mortier ou d'un béton liquide sans ajout d'eau, un procédé pour la préparation de ladite composition et un kit comprenant cette composition.

Le béton est un matériau couramment utilisé pour la réalisation d'ouvrage d'art et de diverses constructions. En effet, il s'agit d'un produit qui présente deux états successifs : une phase plastique ou fluide permettant de le mettre en oeuvre par moulage, puis une phase de durcissement et de montée en résistances qui lui permet d'atteindre ses performances mécaniques d'usage.

Le béton est couramment constitué d'un liant hydraulique, de granulats, d'eau et d'éventuels adjuvants. L'eau participe aux deux phases successives de la vie du béton. Elle contribue à l'obtention de la phase plastique ou fluide en constituant une pâte avec le liant hydraulique et participe par la suite aux mécanismes de prise qui conduisent aux qualités d'usage du béton.

Les mécanismes de prise d'un liant hydraulique dépendent de la nature de celui-ci. D'une manière générale, la prise procède d'une succession de réactions de solubilisation et de précipitations de nouvelles espèces chimiques. Ces nouvelles espèces chimiques, essentiellement des cristaux, croissent et coalescent de telle manière qu'elles assurent par leur enchevêtrement une continuité de la matière conduisant à sa rigidification. Cet enchaînement de réactions est communément appelé hydratation.

Les bétons sont réalisés couramment en utilisant des ciments comme liants hydrauliques. La nature de ces ciments ne remet pas en cause les principes généraux décrits ci-dessus mais conditionne les règles de formulation et notamment la quantité d'eau.

La quantité d'eau rentrant dans la composition d'un béton hydraulique joue un rôle crucial dans la qualité du béton finalement préparé. En effet, les résistances mécaniques finales du béton son conditionnées par les quantités relatives de liant hydraulique et d'eau. D'une manière générale, plus le rapport eau sur liant est faible plus les résistances finales sont élevées. Ce rapport est habituellement noté E/C (rapport massique eau sur ciment). Pour un ciment portland de type CEM I suivant la norme EN 197-1, il est usuel de l'utiliser dans des compositions cimentaires dont le rapport E/C est compris entre 0,35 et 0,65.

Les besoins stoechiométriques en eau relatifs à la prise sont inférieurs aux besoins nécessaires à l'obtention d'une consistance propre à la mise en oeuvre du matériau. Ainsi, il est usuellement constaté que l'hydratation totale d'un CEM I requiert un E/C supérieur ou égal à 0,2. L'eau en excès permet d'obtenir des mortiers ou béton suffisamment plastiques voire fluides pour être mis en oeuvre.

En conséquence, la quantité d'eau participant à la formulation d'une composition cimentaire de type béton, mortier ou autre joue un rôle important pour la qualité finale de ceux-ci.

Si l'eau est en excès, les caractéristiques mécaniques finales seront en retrait de ce que l'on peut attendre. En particulier, la résistance du produit finalement préparé sera plus faible, sa porosité augmentera ce qui le rendra plus sensible aux agressions chimiques extérieures, et, à l'état frais, des phénomènes de ségrégation statique et dynamique seront observés.

De plus, la qualité de l'eau utilisée peut aussi avoir un impact sur les performances du produit. Ceci est particulièrement important dans les lieux ou les ressources en eau sont limitées.

Il y a donc une nécessité de mettre à disposition des utilisateurs un mortier ou un béton qui puisse être préparé facilement, sans risque qu'un excès d'eau nuisible à la qualité finale du béton ou qu'une eau de mauvaise qualité soit utilisée

Les polymères dits « superabsorbants » sont connus pour leur capacité à capter l'eau et à la retenir. La demande de brevet EP-A-0338739 décrit l'utilisation d'eau piégée dans un superabsorbant en vu d'être ajoutée à un mélange de granulat pour préparer des mortiers ou des bétons à faible ratio eau sur ciment (E/C). L'ajout d'eau piégée dans un polymère superabsorbant est présenté comme remédiant à la difficulté de malaxage des mortiers ou bétons ainsi préparés ou comme permettant un contrôle de la température ou encore un contrôle de la perte d'ouvrabilité des mortiers et bétons lors de la phase plastique. Ce document ne fait aucune mention de la problématique à l'origine de la présente invention.

Dans Water-entrained cement-based materials, Cement and concrete 2001, vol. 31, n°4, pp. 647-654 , JENSEN Ole Mejlhede et al. rapportent l'utilisation de polymères superabsorbant est décrite comme un moyen de garder l'eau à l'intérieur d'un composition cimentaire dans le but de limiter la dessiccation.

Enfin, dans Autogenous Shrinkage of Concrete with Super-Absorbent Polymer ACI materials journal, 2009, vol. 106, n°2, pp. 123-127, WANG Fazhou et al. rapportent l'utilisation d'un polymère superabsorbant pour réduire le retrait des ciments. Cependant la dégradation des performances mécaniques des ciments ainsi préparés est également rapportée par les auteurs.

Or, il a maintenant été trouvé de façon toute à fait surprenant une composition permettant la préparation de béton ou de mortier sans ajout d'eau, apportant ainsi une solution satisfaisante aux problèmes techniques mentionnés ci-dessus, sans dégrader les performances des matériaux finalement obtenus. Grâce à cette composition, l'utilisateur final n'aura en effet pas à se préoccuper de la qualité et/ou de la quantité d'eau nécessaire à la préparation du mortier ou du béton.

Ainsi, la présente invention a pour objet une composition sous forme de solide divisé comprenant :
- de 80% à 95% d'un mélange de granulats naturels ou artificiels de classe granulaire différente dont les proportions relatives permettent la réalisation de béton ou de mortier;
- de 0,005% à 1 % d'un polymère superabsorbant ; et
- de 1% à 20% d'eau.

La composition selon l'invention permet en effet, par l'ajout d'un mélange sous forme de poudre de ciment et d'adjuvants, et sans ajout d'eau, de préparer un mortier ou béton liquide. Il a en effet été observé de façon toute à fait surprenante que l'eau comprise dans la composition selon l'invention rentrait dans les sphères de polymère superabsorbant et y restait de manière stable jusqu'à ce qu'elle soit libérée au contact avec le mélange de ciment et d'adjuvants, donnant ainsi sa plasticité au béton.

Dans le cadre de la présente invention on entend par « mélange de granulats » un mélange de granulats naturels ou artificiels de classe granulaire différente dont les proportions relatives permettent la réalisation de béton ou de mortier conformément aux règles de formulation connues de l'homme de l'art. Les granulats et les termes utilisés sont décrits par la norme NF EN 12620+A1:2008-06. Préférentiellement, le mélange de granulats comprend du sable, du gravillon et du gravier et peut contenir éventuellement de la fine. Les différentes classes granulaires peuvent être de type roulé, semi-concassé ou concassé de toutes natures pétrographiques. De préférence les granulats de type silico-calcaire permettent une réalisation avantageuse de l'invention.

De plus, dans le cadre de la présente invention, on entend par « polymère superabsorbant » tout polymère réticulé capable d'absorber jusqu'à 1000 fois sa masse d'eau. Les polymères de type superabsorbant sont habituellement utilisés dans le domaine de l'hygiène corporel. Ils sont essentiellement constitués de longues chaines hydrophiles réticulées leur conférant une forte affinité pour l'eau tout en étant insolubles du fait de leur structure tridimensionnelle. Cette particularité leur permet de se gonfler d'eau tout en ne se dispersant pas dedans. A titre d'exemple de tels polymères, on peut citer les copolymères d'acide acrylique et d'acrylate de sodium réticulés, les alcools polyvinyliques, les produits greffés à base de polysaccharides naturels, naturels modifiés ou synthétiques. Préférentiellement, on peut citer les copolymères d'acide acrylique et d'acrylate de sodium réticulés qui permettent d'atteindre des taux de d'absorption d'eau très élevés.

Enfin, dans le cadre de la présente invention, les proportions exprimées en % correspondent à des pourcentages massiques par rapport au poids total de la composition considérée.

Préférentiellement,
la composition selon l'invention comprend :
- de 85 à 93 % d'un mélange de granulats ;
- de 0,01 à 0,5 % de polymère superabsorbant ; et
- de 5 à 10 % d'eau.

Préférentiellement encore, la composition selon l'invention est exempte de tout adjuvant.

Dans le cadre de la présente invention, on entend par adjuvant toute substance chimique ou un mélange de substance chimique propre à modifier les performances du mortier ou du béton à l'état frais ou à l'état durci.

La présente invention a également pour objet un procédé de préparation de la composition telle que décrite précédemment, comprenant les étapes suivantes :
- malaxage à sec des granulats et des billes de polymère superabsorbant ;
- introduction de l'eau de gâchage ; et
- malaxage jusqu'à l'obtention d'un mélange homogène sous forme de solide divisé.

La présente invention concerne également les différents produits préparés à partir de la composition, en particulier les bétons et les mortiers. Ainsi, la présente invention a également pour objet un béton ou un mortier comprenant la composition selon l'invention.

La présente invention a également pour objet un kit utile pour la préparation d'un béton ou d'un mortier sans ajout d'eau, ledit kit comprenant :
- une composition sous forme de solide divisé selon l'invention ;
- un mélange sous forme de poudre de ciment et d'un ou plusieurs adjuvants.

Dans le cadre de la présente invention, les ciments utilisés sont de la famille des ciments Portland, des ciments d'aluminate de calcium, des ciments sulfoalumineux et les ciments prompts naturels.

Préférentiellement, les adjuvants utilisés dans le kit sont choisis parmi les substances chimiques ou un mélange de substances chimiques propres à modifier les performances du mortier ou du béton à l'état frais ou à l'état durci. Ils sont généralement constitués de molécules organiques ou inorganiques sous forme de sels ou non. Ils peuvent être des polymères hydrosolubles ou non, fonctionnalisés ou non. Préférentiellement encore, les adjuvants utilisés dans le kit sont choisis parmi produits décrits dans la norme EN 934-2 définissant les adjuvants pour mortiers et bétons. De préférence, les adjuvants utilisés seront choisis parmi les superplastifiants ou hauts réducteurs d'eau de type polycarboxylates, polymélamines sulfonées, les lignosulfonates et les polynaphtalènesulfonates.

Les adjuvants utilisés dans le kit sont sous forme de poudre (pas en solution dans l'eau) afin de pouvoir être mélangés au ciment sans provoquer de réactions d'hydratation.

De façon préférée, le kit selon l'invention se présente sous la forme d'un sac avec deux compartiments :
- le premier compartiment scellé hermétiquement contenant la composition selon l'invention ; et
- le second compartiment contient un mélange sous forme de poudre de ciment et d'un ou plusieurs adjuvants.

Un tel sac peut par exemple être préparé de la manière suivante :
- malaxage à sec des granulats et des billes de polymère superabsorbant ;
- introduction de l'eau de gâchage ;
- malaxage jusqu'à l'obtention d'un mélange homogène ;
- introduction du mélange dans le premier compartiment du sac et sceller hermétiquement pour éviter toute évaporation de l' eau ; et
- introduction du ciment et éventuellement des adjuvants en poudre dans le deuxième compartiment et sceller hermétiquement.

Enfin, la présente invention concerne également les différents produits préparés à partir du kit décrit précédemment, en particulier les bétons et les mortiers. Ainsi, la présente invention a également pour objet l'utilisation du kit décrit précédemment pour préparer un béton ou un mortier.

La présente invention peut être illustrée de façon non limitative par les exemples suivants.

### Exemple 1

Trois bétons de classe C30/37 XF1 S2 D11 selon la norme EN206-1 ont été réalisés à partir de kits contenant les constituants suivants.

| **Constituants** | **Kit référence** | | **Kit 1** | | **Kit 2** | |
|---|---|---|---|---|---|---|
| *Compartiment A* | *kg*/*m3* | % *massique* | *kg*/*m3* | % *massique* | *kg*/*m3* | % *massique* |
| Sable 0/4R Perrin | 997 | 47.887 | 997 | 47.887 | 997 | 47.887 |
| Gr 4/11,2 RL Faverges | 928 | 44.573 | 928 | 44.573 | 928 | 44.573 |
| NORSOCRYL D60 | - | - | 1 | 0.048 | 0.75 | 0.036 |
| Eau Totale | 157 | 7.541 | 157 | 7.541 | 157 | 7.541 |
| | | | | | | |

| *Compartiment B* | *kg*/*m3* | % *massique* | *kg*/*m3* | % *massique* | *kg*/*m3* | % *massique* |
|---|---|---|---|---|---|---|
| Ciment: CEM II/ A LL 42,5 R VICAT MONTALIEU | 350 | 99.7009 | 350 | 99.7009 | 350 | 99.7009 |
| PERAMIN LP 170 | 1.05 | 0.2991 | 1.05 | 0.2991 | 1.05 | 0.2991 |

La composition contenu dans le compartiment A du Kit référence ne contient pas de polymère superabsorbant. Un ajout d'eau est nécessaire à la préparation du béton à partir de ce kit. Ce kit référence permettra de mesurer l'impact du polymère superabsorbant sur les performances à l'état frais et à l'état durci du béton finalement préparé.

Les kits 1 et 2 sont réalisés conformément à l'invention. Aucun ajout d'eau n'est nécessaire à la préparation du béton à partir de ces kits. Ils sont réalisés en deux compartiments scellés.

Les compositions introduites dans le compartiment A se présente sous la forme d'un solide divisé obtenu en mélangeant puis en malaxant le granulat (sable 0/4 et gravier 4/11), le polymère superabsorbant de type polyacrylate de sodium réticulé de dénomination commerciale NORSOCRYL D60 de la société ARKEMA et l'eau.

Dans le compartiment B on introduit un mélange de ciment (CEM II/ A LL 42,5 R VICAT MONTALIEU) et de superplastifiant en poudre de type polycarboxylate de dénomination commerciale PERAMIN LP 170 de la société PERAMIN SA.

Les compartiments sont des poches scellées et étanches en matière plastique permettant la conservation des deux mélanges : garder l'eau dans le compartiment A et maintenir le ciment au sec dans le compartiment B.

Pour chaque essai, les deux poches sont ouvertes et leur contenu mélangé.

Après quelques instants, le mélange des deux matériaux pulvérulents se transforme en un béton plastique dont les performances à l'état frais et à l'état durci ont été mesurées. Les résultats obtenus sont rassemblées dans le tableau suivant :

| **Performance mesurée** | **Béton préparé à partir du kit Référence** | | | | **Béton préparé à partir du Kit 1** | | | | **Béton préparé à partir du Kit 2** | | | |
|---|---|---|---|---|---|---|---|---|---|---|---|---|
| *Temps (min)* | *0* | *30* | *60* | | *0* | *30* | *60* | | *0* | *30* | *60* | |
| Affaissement (mm) EN12350-2 | 140 | 80 | 50 | | 30 | 10 | 10 | | 40 | 10 | 10 | |
| Masse volumique (kg/m3) EN12350-6 | 2338 | | 2368 | | 2370 | | 2381 | | 2380 | | 2395 | |
| Air occlus (%) EN12350-7 | 4.6 | | 4.7 | | 4.4 | | 4.2 | | 3.5 | | 3.4 | |
| | | | | | | | | | | | | |

| *Échéances (jours)* | *1* | *2* | *7* | *28* | *1* | *2* | 7 | *28* | *1* | *2* | *7* | *28* |
|---|---|---|---|---|---|---|---|---|---|---|---|---|
| Rc (MPa) EN 12390-3 | 15 | 25 | 36 | 42 | 14 | 23 | 32.5 | 38.5 | 15.5 | 23.5 | 34 | 39.5 |
| % de perte Rc /Nominale | | | | | 6.7 | 8.0 | 9.7 | 8.3 | -3.3 | 6.0 | 5.6 | 6.0 |
| Rf (MPa) EN12390-3 | | | | 3.9 | | | | 3.8 | | | | 4 |
| Retrait (µm/m) NFP18427 | | -57 | -157 | -315 | | -62 | -146 | -306 | | - 68 | - 153 | - 322 |

Les essais de mesure d'affaissement réalisés suivant la norme EN12350-2 permettent de caractériser la consistance du béton. Plus la valeur est élevée plus le béton est plastique voire fluide.
Les essais de mesure de la masse volumique suivant la norme EN 12350-6 permettent de caractériser la qualité globale du m béton à l'état frai.
De même, la mesure de l'air occlus suivant la norme EN12350-7 permet de vérifier la quantité d'air entraîné dans la formulation du béton lors du malaxage. Plus la valeur d'air occlus est élevée, plus les résistances mécaniques à terme du béton seront amoindries. Par contre, l'air occlus peut permettre de formuler des bétons résistants au gel.
La résistance à la compression (Rc) et la résistance au fendage (Rf) mesurées suivant la norme EN12390-3 permettent de caractériser les performances mécaniques du béton à cours, moyen et long terme (2, 7 et 28 jours).
Le retrait, mesuré suivant la norme NFP 18427, permet de caractériser la contraction du mortier ou du béton pendant la prise et la montée en résistance.

Ainsi, on note que le polymère superabsorbant augmente la consistance du béton (essai d'affaissement), et n'a pas d'influence significative sur les autres essais à l'état frais : la masse volumique et l'air occlus.

A l'état durci, on note une légère perte de performance en ce qui concerne les résistances à la compression sans dégradation des autres performances. Cette perte peut être compensée par un léger surdosage en ciment.

### Exemple 2

Trois mortiers ont été réalisés à partir de kits contenant les constituants suivants :

| **Constituants** | **Kit référence** | | **Kit 1** | | **Kit 2** | |
|---|---|---|---|---|---|---|
| *Compartiment A* | *kg*/*m³* | % *massique* | *kg*/*m³* | % *massique* | *kg*/*m³* | *% massique* |
| Sable 0/4 | 1566 | 88.7 | 1566 | 88.637 | 1566 | 88.612 |
| NORSOCRYL D60 | - | - | 0.75 | 0.042 | 1.25 | 0.071 |
| Eau Totale | 200 | 11.3 | 200 | 11.320 | 200 | 11.317 |
| | | | | | | |

| *Compartiment B* | *kg*/*m³* | % *massique* | *kg*/*m³* | % *massique* | *kg*/*m³* | *% massique* |
|---|---|---|---|---|---|---|
| CEM II/ A LL 42,5 R VICAT MONTALIEU | 400 | 63.37 | 400 | 63.37 | 400 | 63.37 |
| BETOCARB P2 OMYA GY | 230 | 36.44 | 230 | 36.44 | 230 | 36.44 |
| MELFLUX 2651 F BASF | 1.20 | 0.19 | 1.20 | 0.19 | 1.20 | 0.19 |

La composition contenu dans le compartiment A du kit de référence ne contient pas de polymère superabsorbant. Un ajout d'eau est nécessaire à la préparation du mortier à partir de ce kit. Ce kit référence permettra de mesurer l'impact du polymère superabsorbant sur les performances à l'état frais et à l'état durci du béton finalement préparé.

Les kits 1 et 2 ont été préparés comme les kits de l'exemple 1.

Pour chaque essai, les deux poches sont ouvertes et leur contenu mélangé.

Après quelques instants, le mélange des deux matériaux pulvérulents se transforme en un mortier plastique dont les performances à l'état frais et à l'état durci sont rassemblées dans le tableau suivant :

| **Performance mesurée** | **Mortier préparé à partir du kit référence** | | | | **Mortier préparé à partir du kit 1** | | | | **Mortier préparé à partir du kit 2** | | | |
|---|---|---|---|---|---|---|---|---|---|---|---|---|
| *Temps (min)* | *0* | *30* | *60* | | *0* | *30* | *60* | | *0* | *30* | *60* | |
| Affaissement (mm) EN12350-2 | 210 | 160 | 120 | | 180 | 100 | 50 | | 160 | 50 | | |
| Masse volumique (kg/m3) EN12350-6 | 2268 | | 2284 | | 2265 | | 2283 | | 2272 | | | |
| Air occlus (%) EN12350-7 | 4.8 | | 5.4 | | 5.8 | | 5.2 | | 6 | | | |
| | | | | | | | | | | | | |

| *Échéances (jours)* | *1* | *2* | *7* | *28* | *1* | *2* | *7* | *28* | *1* | *2* | *7* | *28* |
|---|---|---|---|---|---|---|---|---|---|---|---|---|
| Rc (MPa) EN12390-3 | 20.5 | 29.5 | 38.5 | 48 | 17.5 | 25 | 31 | 42 | 19 | 27 | 36.5 | 46.5 |
| Rf (MPa) EN12390-3 | | | | 3.9 | | | | 3.8 | | | | 3.8 |
| Retrait (µm/m) NFP18427 | | -68 | -246 | -397 | | -79 | -184 | -318 | | -55 | -202 | -365 |

On note que le polymère superabsorbant augmente la consistance du béton (essai d'affaissement), et n'a pas d'influence significative sur les autres essais à l'état frais : la masse volumique et l'air occlus.

A l'état durci, on note une légère perte de performance en ce qui concerne les résistances à la compression sans dégradation des autres performances. Cette perte peut être compensée par un léger surdosage en ciment.

### Exemple 3

Quatre bétons de classe C30/37 S4 D22,4 selon la norme EN206-1 ont été réalisés à partir de kits contenant les constituants suivants ::

| **Constituants** | **Référence** | **Kit 1** | **Kit 2** | **Kit 3** |
|---|---|---|---|---|
| *Compartiment A* | *kg*/*m³* | *kg*/*m³* | *kg*/*m³* | *kg*/*m³* |
| Sable 0/4Scl St Jean le vieux | 748 | 748 | 748 | 748 |
| Gr 4/11,2 RL Faverges | 310 | 310 | 310 | 310 |
| Gr 11,2/22,4 RL Faverges | 721 | 721 | 721 | 721 |
| NORSOCRYL D60 | - | 0.93 | 0.86 | 1.5 |
| Eau Totale | 195 | 195 | 195 | 195 |
| | | | | |

| *Compartiment B* | *kg*/*m³* | *kg*/*m³* | *kg*/*m³* | *kg*/*m³* |
|---|---|---|---|---|
| CEM I 52,5 N PM VICAT MONTALIEU | 350 | 350 | 350 | 350 |

La composition contenu dans le compartiment A du kit de référence ne contient pas de polymère superabsorbant. Un ajout d'eau est nécessaire à la préparation du mortier à partir de ce kit. Ce kit référence permettra de mesurer l'impact du polymère superabsorbant sur les performances à l'état frais et à l'état durci du béton finalement préparé.

Les kits 1, 2 et 3 ont été préparés comme les kits de l'exemple 1.

Pour chaque essai, les deux poches sont ouvertes et leur contenu mélangé.

Après quelques instants, le mélange des deux matériaux pulvérulents se transforme en un mortier plastique dont les performances à l'état frais et à l'état durci sont rassemblées dans le tableau suivant :

| **Performance mesurée** | **Béton préparé à partir du kit référence** | **Béton préparé à partir du kit 1** | **Béton préparé à partir du kit 2** | **Béton préparé à partir du kit 3** |
|---|---|---|---|---|
| *Temps (min)* | *0* | *0* | *0* | *0* |
| Affaissement (mm) EN12350-2 | 210 | 210 | 210 | 200 |
| Masse volumique (kg/m3) EN 12350-6 | 2439 | 2387 | 2395 | 2393 |
| Air occlus (%) EN12350-7 | 0.5 | 0.8 | 0.8 | 1.1 |
| | | | | |

| *Échéance (jours)* | *7* | *7* | *7* | *7* |
|---|---|---|---|---|
| Rc (MPa) EN12390-3 | 31.5 | 28.5 | 30 | 31.5 |

On note que l'utilisation d'un CEMI permet de garder une consistance stable malgré la quantité de polymère superabsorbant rentrant dans la composition et que les performances à l'état durci ne sont pas affectées.

## Revendications

1. Composition sous forme de solide divisé comprenant :
- de 80% à 95% (p/p) d'un mélange de granulats naturels ou artificiels de classe granulaire différente dont les proportions relatives permettent la réalisation de béton ou de mortier ;
- de 0,005% à 1 % (p/p) d'un polymère superabsorbant ; et
- de 1% à 20% (p/p) d'eau.

2. Composition selon la revendication 1, **caractérisée en ce que** le mélange de granulats comprend du sable, du gravillon et du gravier.

3. Composition selon la revendication 1 ou 2, **caractérisée en ce que** le superabsorbant est choisi parmi les copolymères d'acide acrylique et d'acrylate de sodium réticulés, les alcools polyvinyliques, les produits greffés à base de polysaccharides naturels, naturels modifiés ou synthétiques.

4. Composition selon l'une quelconque des revendications 1 à 3, **caractérisée en ce qu'**elle est exempte de toute substance chimique ou mélange de substances chimiques propre(s) à modifier les performances du mortier ou du béton à l'état frais ou à l'état durci.

5. Procédé de préparation d'une composition selon l'une quelconque des revendications 1 à 4, comprenant les étapes suivantes :
- malaxage à sec des granulats et des billes de polymère superabsorbant ;
- introduction de l'eau de gâchage ; et
- malaxage jusqu'à l'obtention d'un mélange homogène sous forme de solide divisé.

6. Kit utile pour la préparation d'un béton ou d'un mortier sans ajout d'eau, ledit kit comprenant :
- une composition selon l'une quelconque des revendications 1 à 4 ; et
- un mélange sous forme de poudre de ciment et d'un ou plusieurs adjuvants.

7. Kit selon la revendication 6, **caractérisé en ce qu'**il se présente sous la forme d'un sac avec deux compartiments :
- le premier compartiment scellé hermétiquement contenant une composition selon l'une quelconque des revendications 1 à 4; et
- le second compartiment contient un mélange sous forme de poudre de ciment et d'un ou plusieurs adjuvants.

8. Kit selon la revendication 6 ou 7, **caractérisé en ce que** les adjuvants utilisés sont choisis parmi les superplastifiants ou hauts réducteurs d'eau de type polycarboxylates, polymélamines sulfonées, les lignosulfonates et les polynaphtalènesulfonates.

9. Utilisation du kit selon l'une des revendications 6 à 8 pour préparer un béton ou un mortier.

## Patentansprüche

1. Zusammensetzung in Form eines zerteilten Feststoffs, die umfasst:
- 80 % bis 95 % (p/p) eines Gemischs natürlicher oder künstlicher Granulate verschiedener Kornklassen, deren relativen Anteile die Herstellung von Beton oder von Mörtel erlauben,
- 0,005 % bis 1 % (p/p) eines superabsorbierenden Polymers, und
- 1 % bis 20 % (p/p) Wasser.

2. Zusammensetzung nach Anspruch 1, **dadurch gekennzeichnet, dass** das Granulatgemisch Sand, Splitt und Kies umfasst.

3. Zusammensetzung nach Anspruch 1 oder 2, **dadurch gekennzeichnet, dass** das Superabsorptionsmittel aus den vernetzten Acrylsäure- und Natriumacrylat-Copolymeren, den Polyvinylalkoholen, den aufpolymerisieerten Produkten auf der Basis von natürlichen, natürlichen modifizierten oder synthetischen Polysacchariden ausgewählt ist.

4. Zusammensetzung nach einem der Ansprüche 1 bis 3, **dadurch gekennzeichnet, dass** sie frei ist von jeder chemischen Substanz oder von Gemischen chemischer Substanzen, die imstande ist/sind, die Leistungen des Mörtels oder des Betons im frischen Zustand oder im gehärteten Zustand zu modifizieren.

5. Verfahren zur Herstellung einer Zusammensetzung nach einem der Ansprüche 1 bis 4, das die folgenden Schritte umfasst:
- Trockenmischen der Granulate und der superabsorbierenden Polymerkugeln,
- Einleiten von Anmachwasser, und
- Mischen bis zum Erhalt eines homogenen Gemischs in Form eines zerteilten Feststoffs.

6. Set zur Herstellung eines Betons oder eines Mörtels ohne Zugabe von Wasser, wobei das Kit umfasst:
- eine Zusammensetzung nach einem der Ansprüche 1 bis 4, und
- ein Gemisch in Form von Zementpulver und eines oder mehrerer Zusätze.

7. Set nach Anspruch 6, **dadurch gekennzeichnet, dass** es die Form eines Sacks mit zwei Abteilen hat:
- wobei das erste hermetisch verschlossene Abteil eine Zusammensetzung nach einem der Ansprüche 1 bis 4 enthält und
- das zweite Abteil ein Gemisch in Form von Zementpulver und eines oder mehrerer Zusätze enthält.

8. Set nach Anspruch 6 oder 7, **dadurch gekennzeichnet, dass** die verwendeten Zusätze aus den Superweichmachern oder Fließmitteln vom Typ Polycarboxylate, sulfonierte Polymelamine, den Lignosulfonaten und den Polynaphthalensulfonaten ausgewählt sind.

9. Verwendung des Sets nach einem der Ansprüche 6 bis 8 zur Herstellung eines Betons oder eines Mörtels.

## Claims

1. A composition of divided solid form, comprising:
- 80 to 95% of a mixture of natural or artificial aggregates of different granular classes, the relative proportions of which allow the production of concrete or mortar;
- 0.005 to 1% superabsorbent; and
- 1 to 20% water.

2. Composition as claimed in claim 1, **characterized in that** the aggregate mixture comprises sand, fine gravel and coarse gravel.

3. Composition as claimed in claim 1 or 2, **characterized in that** the superabsorbent is chosen from crosslinked acrylic acid/sodium acrylate copolymers, polyvinyl alcohols and grafted products based on natural, modified natural or synthetic polysaccharides.

4. Composition as claimed in any one of claims 1 to 3, **characterized in that** it comprises it is free of any chemical substance or a mixture of chemical substances capable of modifying the performance of the mortar or concrete in the fresh state or in the hardened state.

5. A process for preparing a composition as claimed in any one of claims 1 to 4, comprising the following steps:
- dry-blending of the aggregates and superabsorbent beads;
- introduction of the mixing water; and
- mixing until a homogeneous mix in divided solid form is obtained.

6. A kit useful for preparing a concrete or a mortar without adding water, said kit comprising:
- a composition as claimed in any one of claims 1 to 5; and
- a mix in the form of cement powder and one or more admixtures.

7. Kit as claimed in claim 6, **characterized in that** it is in the form of a bag having two compartments:
- the hermetically sealed first compartment containing a composition as claimed in any one of claims 1 to 4; and
- the second compartment contains a mix in the form of cement powder and one or more admixtures.

8. Kit as claimed in claim 6 or 7 **characterized in that** the admixtures used are chosen from superplasticizers or strong water reducers of the polycarboxylate, sulfonated polymelamine, lignosulfonate and polynaphthalenesulfonate type.

9. Use of the kit as claimed in one of claims 6 to 8 for preparing a concrete or a mortar.
